# EUROPÄISCHE PATENTSCHRIFT

(11) **EP 3 726 110 B1**
(45) Veröffentlichungstag und Bekanntmachung des Hinweises auf die Patenterteilung: **23.04.2025**
(21) Anmeldenummer: 20167454.6
(22) Anmeldetag: 01.04.2020
(51) Int. Cl.: F16K 15/18, F16K 7/07, F16K 11/10

(54) **VENTILEINRICHTUNG FÜR EINE PNEUMATISCH BETÄTIGBARE REIBUNGSKUPPLUNG**
VALVE ASSEMBLY FOR A PNEUMATIC FRICTION CLUTCH
DISPOSITIF DE SOUPAPE POUR UN EMBRAYAGE À FRICTION À ACTIONNEMENT PNEUMATIQUE

(30) Priorität: 18.04.2019 DE 102019110259
(43) Veröffentlichungstag der Anmeldung: 21.10.2020
(73) Patentinhaber: ZF CV Systems Europe BV, 1170 Brussels (BE)
(72) Erfinder: KNOKE, Stefan, 30657 Hannover (DE)
(74) Vertreter: Rabe, Dirk-Heinrich

(56) Entgegenhaltungen:
- WO-A1-2012/131503
- DE-A1- 10 210 877
- DE-A1- 102007 002 899
- US-A- 4 729 401

## Beschreibung

Die Erfindung betrifft eine Ventileinrichtung für eine pneumatisch betätigbare Reibungskupplung, aufweisend ein eingangsseitig an eine druckführende Vorratsleitung und ausgangsseitig an einen Arbeitseingang eines Stellzylinders der Reibungskupplung anschließbares, als 2/2-Wege-Magnetsitzventil ausgebildetes Einlassventil, ein eingangsseitig an den Arbeitseingang des Stellzylinders und ausgangsseitig an einen Entlüftungsausgang anschließbares, als 2/2-Wege-Magnetsitzventil ausgebildetes Auslassventil.

Bei einer pneumatisch betätigbaren Reibungskupplung wird durch das Öffnen des genannten Einlassventils der zugeordnete Stellzylinder belüftet, wodurch die Reibungskupplung je nach Bauart ausgerückt oder eingerückt wird. Durch das Öffnen des Auslassventils wird der Stellzylinder entlüftet, wodurch die Reibungskupplung je nach Bauart eingerückt oder ausgerückt wird. Das Druckhalteventil, bei dem es sich um ein in Richtung zum Einlassventil schließendes Rückschlagventil handelt, hat bei geöffnetem Einlassventil und belüftetem Stellzylinder die Funktion, den Arbeitsdruck in dem Stellzylinder aufrecht zu halten, sofern der in der Vorratsleitung anliegende Vorratsdruck, zum Beispiel aufgrund eines Leitungsbruchs oder eines Defektes in der Druckluftversorgungseinrichtung, absinkt. Dadurch wird eine durch eine ungesteuerte Entlüftung des Stellzylinders bewirkte unbeabsichtigte Betätigung der Reibungskupplung verhindert. Das Ablassventil, bei dem es sich um ein bei hohem eingangsseitigen Luftdruck in Richtung eines Entlüftungsausgangs schließendes sowie bei niedrigem eingangsseitigen Luftdruck öffnendes Rückschlagventil handelt, hat bei geschlossenem Einlassventil und entlüftetem Stellzylinder die Funktion, leckagebedingt über das Einlassventil einströmende Druckluft abzulassen und damit eine durch eine ungesteuerte Belüftung des Stellzylinders bewirkte unbeabsichtigte Betätigung der Reibungskupplung zu verhindern

Eine derartige Ventileinrichtung einer pneumatisch betätigbaren Reibungskupplung ist beispielsweise aus der DE 102 10 877 A1 bekannt. Das Ablassventil ist dort als ein Kugelrückschlagventil oder als ein Kolbenrückschlagventil ausgebildet und entweder im Kolben des Stellzylinders, im Gehäuse des Stellzylinders oder im Gehäuse des Auslassventils angeordnet. Aufgrund ihrer Bauart weisen die dort verwendeten Ausführungen des Ablassventils eine in Relation zum Öffnungsquerschnitt große axiale Bauhöhe auf, wodurch deren Integration in das Gehäuse eines anderen Ventils, zum Beispiel in ein Einlassventil oder ein Auslassventils, erschwert ist. Zudem weist die dort beschriebene Ventileinrichtung kein Druckhalteventil auf.

DE102007002899A1 offenbart eine Ventilanordnung für ein Kraftfahrzueg enthält eine mit einem Eingang verbundene Eingangskammer und eine durch eine Trennwand von der Eingangskammer getrennte, mit einem Ausgang verbundene Ausgangskammer, und ein in die Trennwand integriertes, ab einem Minimalüberdruck einen Durchgang von der Eingangskammer zur Ausgangskammer freigebendes Rückschlagventil und ein in die Trennwand integriertes, ab einem Minimalunterdruck einen Durchgang von der Ausgangskammer zur Eingangskammer versperrendes Druckregelventil.

US4729401A offenbart eine Ventilanordnung. Die Ventilanordnung umfasst einen Hauptkörper mit zwei darin befindlichen Durchgängen, die in einem großen zentralen Hohlraum innerhalb des Körpers zusammentreffen; eine Körperkappe zum Verschließen einer offenen Seite des zentralen Hohlraums in dem Hauptkörper, wobei die Kappe einen Auslassdurchgang aufweist, eine zentrale Trägerstruktur innerhalb des zentralen Hohlraums des Hauptkörpers, zwei koaxiale Ventilscheiben, die innerhalb des zentralen Körperhohlraums angebracht sind und durch die zentrale Trägerstruktur in Betriebsbeziehung gehalten werden; und wobei der Hauptkörper, die Körperkappe und die zentrale Trägerstruktur jeweils über eine Ventilscheiben-Trägereinrichtung verfügen.

WO2012131503A1 bezieht sich auf Bewässerungsventile und insbesondere auf Bewässerungsventile, die durch ein externes Signal gesteuert werden können.

Bislang sind die Ventile derartiger Ventileinrichtungen separat ausgeführt und über Verschraubungen oder Steckverbindungen mechanisch sowie fluidisch miteinander verbunden. Hierdurch weist die Ventileinrichtung zwangsläufig größere Abmessungen auf und erfordert einen relativ hohen Montageaufwand.

Der vorliegenden Erfindung lag daher die Aufgabe zugrunde, eine Ventileinrichtung für eine pneumatisch betätigbare Reibungskupplung der eingangs genannten Art vorzustellen, welche vergleichsweise kompakte Abmessungen hat und einen geringen Montageaufwand erfordert.

Diese Aufgabe wurde mit einer Ventileinrichtung gelöst, welche die Merkmale des Anspruchs 1 aufweist. Vorteilhafte Ausgestaltungen und Weiterbildungen dieser Ventileinrichtungen sind in den abhängigen Ansprüchen definiert.

Die Erfindung betrifft daher eine Ventileinrichtung für eine pneumatisch betätigbare Reibungskupplung, aufweisend ein eingangsseitig an eine druckführende Vorratsleitung und ausgangsseitig an einen Arbeitseingang eines Stellzylinders der Reibungskupplung anschließbares, als 2/2-Wege-Magnetsitzventil ausgebildetes Einlassventil, ein eingangsseitig an den Arbeitseingang des Stellzylinders und ausgangsseitig an einen Entlüftungsausgang anschließbares, als 2/2-Wege-Magnetsitzventil ausgebildetes Auslassventil, ein eingangsseitig an den Ausgang des Einlassventils und ausgangsseitig an den Arbeitseingang des Stellzylinders anschließbares, als Rückschlagventil ausgebildetes Druckhalteventil, sowie ein eingangsseitig an den Arbeitseingang des Stellzylinders und ausgangsseitig an einen Entlüftungsausgang anschließbares, als Rückschlagventil ausgebildetes Ablassventil.

Weiter zur Lösung der gestellten Aufgabe ist bei dieser Ventileinrichtung außerdem vorgesehen, dass das Druckhalteventil innerhalb des Ventilgehäuses des Einlassventils koaxial zu dessen Ventilsitz zwischen einem an den Ventilsitz angrenzenden Zentralkanal und einer mit dem Ausgang des Einlassventils verbundenen Ausgangskammer angeordnet ist, und dass das Ablassventil innerhalb des Ventilgehäuses des Einlassventils angeordnet ist, oder dass das Ablassventil innerhalb des Ventilgehäuses des Auslassventils angeordnet ist. In einer Ausführungsform ist es vorgesehen, dass das Druckhalteventil und das Ablassventil der Ventileinrichtung als Membranscheibenventile ausgebildet sind.

Durch diese Ausbildung des Druckhalteventils und des Ablassventils weisen diese Ventile in Bezug zu ihrem Öffnungsquerschnitt eine vergleichsweise geringe axiale Bauhöhe auf und sind daher leicht in das Gehäuse des Einlassventils und/oder des Auslassventils integrierbar. Durch die Integration des Druckhalteventils und des Ablassventils in das Einlassventil (erste Ausführungsvariante) beziehungsweise des Druckhalteventils in das Einlassventil und des Ablassventils in das Auslassventil (zweite Ausführungsvariante) wird Bauraum eingespart und der Montageaufwand deutlich reduziert, da die Anzahl der zu montierenden Ventileinheiten in beiden Ausführungen von zuvor vier auf zwei reduziert ist Hinsichtlich der ersten Ausführungsvariante ist bevorzugt vorgesehen, dass das Ablassventil innerhalb des Ventilgehäuses des Einlassventils koaxial zu dessen Ventilsitz axial benachbart zu dem Druckhalteventil in einer Öffnung in einer an die Ausgangskammer angrenzenden Gehäusewand des Ventilgehäuses angeordnet ist. Hierdurch ist ein besonders platzsparender Aufbau realisiert.

Bei der zweiten Ausführungsvariante ist hingegen bevorzugt vorgesehen, dass das Ablassventil innerhalb des Ventilgehäuses des Auslassventils koaxial zu dessen Ventilsitz in einer Öffnung in einer an eine mit dem Eingang des Auslassventils verbundenen Eingangskammer angrenzenden Gehäusewand des Ventilgehäuses angeordnet ist. Auch hierdurch ist ein sehr kompakter Ventilaufbau geschaffen.

Gemäß einer anderen Weiterbildung der Ventileinrichtung kann vorgesehen sein, dass in dem Druckhalteventil und/oder in dem Ablassventil jeweils eine biegeelastische Membranscheibe zumindest teilweise innerhalb eines ringzylindrischen Gehäuses axial zwischen einem über mindestens eine Diagonalstrebe mit dem Gehäuse verbundenen kegelförmigen Stützkörper und einem Ringbund des Gehäuses oder einem axial benachbarten Bauteil angeordnet ist.

Die Membranscheibe des Druckhalteventils und/oder des Ablassventils kann jeweils ausschließlich fliegend gelagert innerhalb des betreffenden Gehäuses geführt sein, also ohne eine besondere Befestigung angeordnet sein.

Um eine Verlagerung der jeweiligen Membranscheibe aus einer zentrierten Sollposition zu verhindern kann vorgesehen sein, dass die Membranscheibe des Druckhalteventils und/oder des Ablassventils eine durchgängige Zentralbohrung aufweist, mittels welcher die Membranscheibe an dem Stützkörper des betreffenden Gehäuses befestigt ist.

Hierzu kann die jeweilige Membranscheibe des Druckhalteventils und/oder des Ablassventils jeweils durch ein Überstülpen der Zentralbohrung der Membranscheibe über einen an der Spitze des jeweiligen Stützkörpers befestigten oder einstückig am Stützkörper angeformten Pilzkopf des betreffenden Gehäuses befestigt sein.

In der genannten ersten Ausführungsvariante der erfindungsgemäßen Ventileinrichtung ist das Gehäuse des Druckhalteventils bevorzugt passgenau in das Gehäuse des Ablassventils eingesetzt und über dieses an einem den Ventilsitz aufweisenden Gehäuseeinsatz des Einlassventils befestigt.

Bei der genannten zweiten Ausführungsvariante der erfindungsgemäßen Ventileinrichtung ist das Gehäuse des Druckhalteventils dagegen bevorzugt unmittelbar mit dem den Ventilsitz aufweisenden Gehäuseeinsatz des Einlassventils verrastet.

Das Gehäuse des Ablassventils ist dagegen je nach Ausführungsvariante der erfindungsgemäßen Ventileinrichtung jeweils mit einem den Ventilsitz aufweisenden Gehäuseeinsatz des Einlassventils oder des Auslassventils verrastet.

Die Erfindung wird nachstehend anhand von in der beigefügten Zeichnung dargestellten Ausführungsbeispielen weiter erläutert. In der Zeichnung zeigt
Fig. 1a eine erste Ausführungsvariante eines Einlassventils einer erfindungsgemäßen Ventileinrichtung mit zwei integrierten sowie in einer ersten Schaltstellung befindlichen Ventilen in einer Schnittansicht,
Fig. 1b das Einlassventil gemäß Fig. 1a mit den zwei integrierten sowie in einer zweiten Schaltstellung befindlichen Ventilen,
Fig. 2a eine zweite Ausführungsform eines Einlassventils einer erfindungsgemäßen Ventileinrichtung mit einem integrierten sowie in einer ersten Schaltstellung befindlichen Ventil in einer Schnittansicht,
Fig. 2b das Einlassventil gemäß Fig. 2a mit dem integrierten sowie in einer zweiten Schaltstellung befindlichen Ventil,
Fig. 3a eine Ausführungsform eines Auslassventils einer erfindungsgemäßen Ventileinrichtung mit einem integrierten sowie in einer ersten Schaltstellung befindlichen Ventil in einer Schnittansicht,
Fig. 3b das Auslassventil gemäß Fig. 3a mit dem integrierten sowie in einer zweiten Schaltstellung befindlichen Ventil, und
Fig. 4 die Ventileinrichtung mit den Ventilen gemäß den Figuren 1a bis 3b in allgemeiner Form in einer schematischen Übersichtsdarstellung.

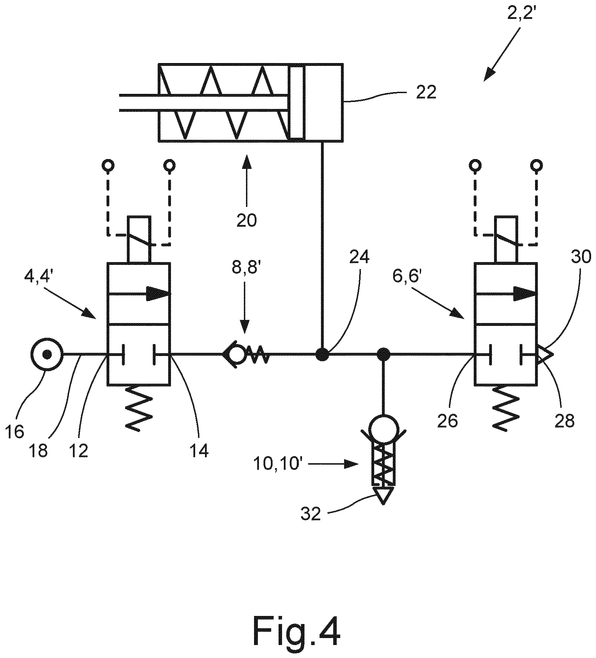

Eine in Fig. 4 in schematischer Form abgebildete Ventileinrichtung 2, 2' einer pneumatisch betätigbaren Reibungskupplung umfasst ein Einlassventil 4, 4', ein Auslassventil 6, 6', ein Druckhalteventil 8, 8' und ein Ablassventil 10, 10'. Das Einlassventil 4, 4' ist als ein 2/2-Wege-Magnetsitzventil ausgebildet und weist einen Eingang 12 sowie einen Ausgang 14 auf. An den Eingang 12 des Einlassventils 4, 4' ist eine druckführende Vorratsleitung 18 angeschlossen, die mit einer Druckluftquelle 16 verbunden ist. An den Ausgang 14 des Einlassventils 4, 4' ist ein Arbeitseingang 24 eines Stellzylinders 20 der Reibungskupplung angeschlossen. Der Stellzylinders 20 ist als Kolben-ZylinderAnordnung ausgebildet. Im dargestellten unbestromten Zustand ist das Einlassventil 4, 4' geschlossen, also der Eingang 12 gegenüber dem Ausgang 14 abgesperrt. Hierdurch ist der Druckraum 22 des Stellzylinders 20 entlüftet und die Reibungskupplung je nach Bauart eingerückt oder ausgerückt ist. Im bestromten Zustand ist das Einlassventil 4, 4' geöffnet, also der Ausgang 14 mit dem Eingang 12 verbunden, wodurch der Druckraum 22 des Stellzylinders 20 belüftet und die Reibungskupplung je nach Bauart ausgerückt oder eingerückt wird.

Das Auslassventil 6, 6' ist ebenfalls als ein 2/2-Wege-Magnetsitzventil ausgebildet und weist einen Eingang 26 und einen Ausgang 28 auf. An den Eingang 26 des Auslassventils 6, 6' ist der Arbeitseingang 24 des Stellzylinders 20 angeschlossen. An den Ausgang 28 des Auslassventils 6, 6' ist ein in die Umgebung führender Entlüftungsausgang 30 angeschlossen. Im dargestellten unbestromten Zustand ist das Auslassventil 6, 6' geschlossen, also der Eingang 26 gegenüber dem Ausgang 28 abgesperrt, wodurch der Druckraum 22 des Stellzylinders 20, sofern dieser belüftet ist, nicht über das Auslassventil 6, 6' entlüftet wird und die Reibungskupplung je nach Bauart ausgerückt oder eingerückt bleibt. Im bestromten Zustand ist das Auslassventil 6, 6' geöffnet, also dessen Eingang 26 mit dessen Ausgang 28 verbunden, wodurch der Druckraum 22 des Stellzylinders 20, sofern dieser belüftet ist, über das Auslassventil 6, 6' entlüftet sowie die Reibungskupplung je nach Bauart eingerückt oder ausgerückt wird.

Das Druckhalteventil 8, 8' ist zwischen dem Ausgang 14 des Einlassventils 4, 4' sowie dem Arbeitseingang 24 des Stellzylinders 20 angeordnet und als ein in Richtung des Einlassventils 4, 4' schließendes Rückschlagventil ausgebildet. Das Druckhalteventil 8, 8' hat bei geöffnetem Einlassventil 4, 4' und belüftetem Stellzylinder 20 die Funktion, den Arbeitsdruck in dem Druckraum 22 des Stellzylinders 20 aufrecht zu halten, sofern der in der Vorratsleitung 18 anliegende Vorratsdruck zum Beispiel aufgrund eines Leitungsbruchs oder eines Defektes in der Druckluftquelle 16 (Druckluftversorgungseinrichtung) absinkt. Hierdurch wird eine durch eine ungesteuerte Entlüftung des Stellzylinders 20 bewirkte unbeabsichtigte Betätigung der Reibungskupplung verhindert.

Das Ablassventil 10, 10' ist zwischen dem Arbeitseingang 24 des Stellzylinders 20 sowie dem Eingang 26 des Auslassventils 6, 6' angeordnet. Es ist als ein bei hohem eingangsseitigen Luftdruck in Richtung eines in die Umgebung führenden Entlüftungsausgangs 32 schließendes sowie bei niedrigem eingangsseitigen Luftdruck öffnendes Rückschlagventil ausgebildet. Das Ablassventil 10, 10' hat bei geschlossenem Einlassventil 4, 4' und entlüftetem Stellzylinder 20 die Funktion, leckagebedingt über das Einlassventil 4, 4' einströmende Druckluft abzulassen und damit eine durch eine ungesteuerte Belüftung des Stellzylinders 20 bewirkte unbeabsichtigte Betätigung der Reibungskupplung zu verhindern.

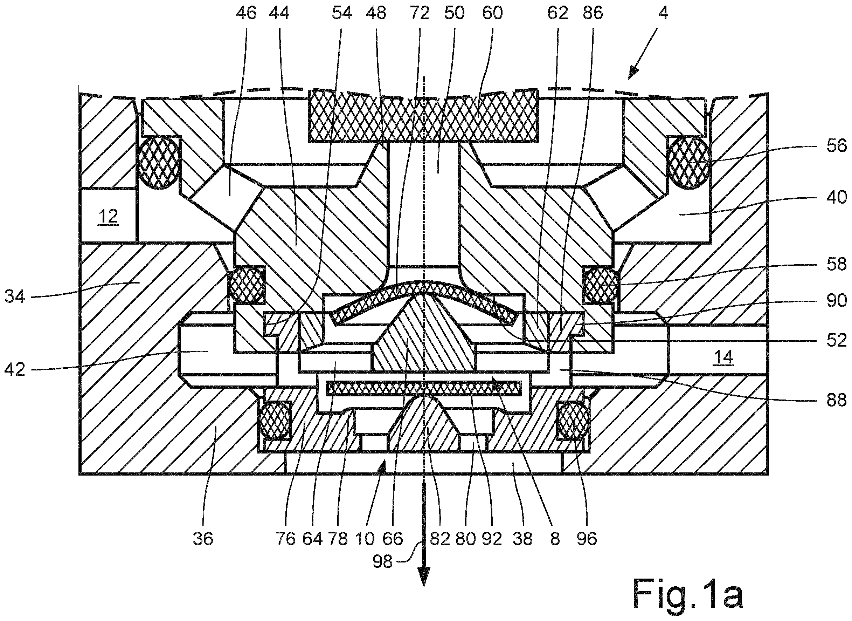

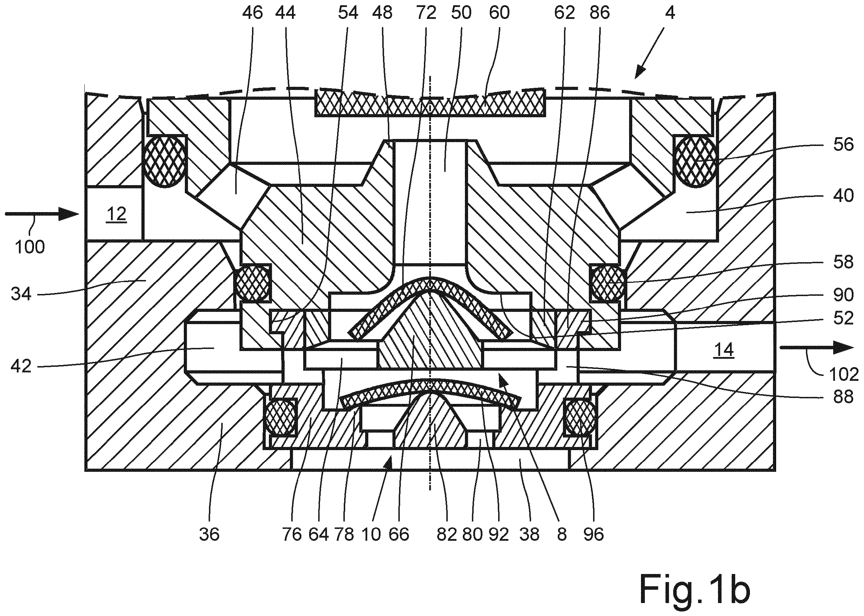

Nachfolgend wird anhand der Figuren 1a und 1b eine erste Ausführungsform des Einlassventils 4 einer ersten Ausführungsvariante der erfindungsgemäßen Ventileinrichtung 2 beschrieben, bei welcher das Druckhalteventil 8 sowie das Ablassventil 10 innerhalb des Ventilgehäuses 34 des Einlassventils 4 angeordnet und somit in das Einlassventil 4 integriert sind.

Das Einlassventil 4 ist als ein 2/2-Wege-Magnetsitzventil ausgebildet. Das Ventilgehäuse 34 des Einlassventils 4 weist einen zylindrischen Innenraum 40 auf, der mit dem Eingang 12 des Einlassventils 4 sowie über eine ringzylindrische Ausgangskammer 42 mit dem Ausgang 14 des Einlassventils 4 verbunden ist. In den Innenraum 40 ist ein mit diagonalen Öffnungen 46 versehener, abgestuft zylindrischer Gehäuseeinsatz 44 eingesetzt, der einen Ventilsitz 48 und einen an diesen radial innen angrenzenden, in Richtung zu der Ausgangskammer 42 führenden zylindrischen Zentralkanal 50 aufweist. Der Eingang 12 und der Innenraum 40 des Ventilgehäuses 34 sind über zwei zwischen der Innenwand des Innenraums 40 und dem Gehäuseeinsatz 44 angeordnete Dichtringe 56, 58 abgedichtet. Der Ventilsitz 48 ist mittels eines zylinderscheibenförmigen Dichtungselements 60 verschließbar, welches in nicht dargestellter Weise von einer Ventilfeder auf dem Ventilsitz 48 gehalten wird und durch die Bestromung eines Elektromagneten von dem Ventilsitz 48 abhebbar ist.

Das Druckhalteventil 8 ist als ein Membranscheibenventil ausgebildet. Das Druckhalteventil 8 ist koaxial zu dem Ventilsitz 48 zwischen dem Zentralkanal 50 des Gehäuseeinsatzes 44 und der Ausgangskammer 42 angeordnet. In einer bevorzugten Ausführungsform weist das Druckhalteventil 8 eine biegeelastische Membranscheibe 72 auf, die fliegend innerhalb eines ringzylindrischen Gehäuses 62 axial zumindest teilweise zwischen einem über mindestens eine Diagonalstrebe 64 mit dem Gehäuse 62 verbundenen kegelförmigen Stützkörper 66 und einem Ringbund 52 um den Zentralkanal 50 des Gehäuseeinsatzes 44 geführt ist.

Das Ablassventil 10 ist als ein Membranscheibenventil ausgebildet. Das Ablassventil 10 ist koaxial zu dem Ventilsitz 48 axial benachbart zu dem Druckhalteventil 8 in einer Öffnung 38 in einer an die Ausgangskammer 42 axial angrenzenden Gehäusewand 36 des Ventilgehäuses 34 angeordnet. In einer bevorzugte Ausführungsform weist das Ablassventil 10 eine biegeelastische Membranscheibe 92 auf, die fliegend innerhalb eines ringzylindrischen Gehäuses 76 axial zwischen einem ringförmigen Ventilsitz 78 des Gehäuses 76 und einem über mindestens eine Diagonalstrebe 80 mit dem Gehäuse 76 verbundenen kegelförmigen Stützkörper 82 sowie der erwähnten Diagonalstrebe 64 und dem Stützkörper 66 des Druckhalteventils 8 geführt ist.

Die Ausgangskammer 42 des Ventilgehäuses 34 ist über einen zwischen der Innenwand der Öffnung 38 in der Gehäusewand 36 und dem Gehäuse 76 des Ablassventils 10 angeordneten Dichtring 96 abgedichtet. Das vorzugsweise aus einem Kunststoff bestehende und als Spritzgussbauteil hergestellte Gehäuse 76 des Ablassventils 10 ist mittels Rastnasen 90, welche an einer mit radialen Öffnungen 88 versehenen axialen Erweiterung 86 des Gehäuses 76 angeordnet sind, durch einen Eingriff in eine zugeordnete Innennut 54 im Gehäuseeinsatz 44 mit diesem verrastet. Das ebenfalls vorzugsweise aus einem Kunststoff bestehende und als Spritzgussbauteil hergestellte Gehäuse 62 des Druckhalteventils 8 ist passgenau in das Gehäuse 76 des Ablassventils 10 radial innen eingesetzt und über dieses an dem Gehäuseeinsatz 44 befestigt.

In der Abbildung der Fig. 1a liegt das Dichtungselement 60 an dem Ventilsitz 48 an, so dass das Einlassventil 4 geschlossen ist. Die Ausgangskammer 42 ist drucklos, so dass die Membranscheibe 72 des Druckhalteventils 8 aufgrund ihrer Eigenspannung an dem Ringbund 52 des Gehäuseeinsatzes 44 anliegt, also das Druckhalteventil 8 geschlossen ist. Aufgrund einer fehlenden Druckbelastung ist die Membranscheibe 92 des Ablassventils 10 von dem Ventilsitz 78 abgehoben und hat eine ebene Gestalt angenommen, so dass das Ablassventil 10 geöffnet ist. Strömt nun leckagebedingt Druckluft über das geschlossene Einlassventil 4 in die Ausgangskammer 42 ein, so strömt diese über das geöffnete Ablassventil 10 entsprechend dem eingezeichneten Strömungspfeil 98 unmittelbar in die Umgebung ab, wodurch eine ungesteuerte Belüftung des Stellzylinders 20 sowie eine dadurch bewirkte unbeabsichtigte Betätigung der betreffenden Reibungskupplung verhindert wird.

In der Abbildung der Fig. 1b ist das Dichtungselement 60 des Einlassventils 4 von dem Ventilsitz 48 abgehoben, so dass das Einlassventil 4 geöffnet ist. Durch die Beaufschlagung mit der über den Ventilsitz 48 in den Zentralkanal 50 einströmenden Druckluft ist die Membranscheibe 72 des Druckhalteventils 8 von dem Ringbund 52 des Gehäuseeinsatzes 44 abgehoben und bis zum Anliegen ihres radial äußeren Randes an die Diagonalstrebe 64 umgestülpt, so dass das Druckhalteventil 8 nun geöffnet ist. Durch die Beaufschlagung mit der einströmenden Druckluft liegt die Membranscheibe 92 des Ablassventils 10 auf dem Ventilsitz 78 auf, so dass das Ablassventil 10 geschlossen ist. Somit strömt entsprechend den eingezeichneten Strömungspfeilen 100, 102 Druckluft aus der an den Eingang 12 des Einlassventils 4 angeschlossenen Vorratsleitung 18 über das geöffnete Einlassventil 4 und das geöffnete Druckhalteventil 8 in den an den Ausgang 14 des Einlassventils 4 angeschlossenen Druckraum 22 des Stellzylinders 20, wodurch die betreffende Reibungskupplung in vorgesehener Weise betätigt, also je nach Bauweise ausgerückt oder eingerückt wird. Kommt es nun in der an den Eingang 12 des Einlassventils 4 angeschlossenen Vorratsleitung 18 zu einem Druckabfall, so wird die Membranscheibe 72 des Druckhalteventils 8 aufgrund der wirksamen Druckdifferenz an den Ringbund 52 des Gehäuseeinsatzes 4 gedrückt, so dass das Druckhalteventil 8 dann geschlossen ist. Damit wird ein plötzlicher Druckverlust in dem an den Ausgang 14 des Einlassventils 4 angeschlossenen Stellzylinder 20 und eine dadurch bewirkte unbeabsichtigte Betätigung der betreffenden Reibungskupplung verhindert.

Durch die Integration des Druckhalteventils 8 und des Ablassventils 10 in das Einlassventil 4 ist die Anzahl der zu montierenden Ventileinheiten der Ventileinrichtung 2 von zuvor vier auf zwei Ventileinheiten reduziert und damit der Montageaufwand entsprechend verringert sowie auch Bauraum eingespart.

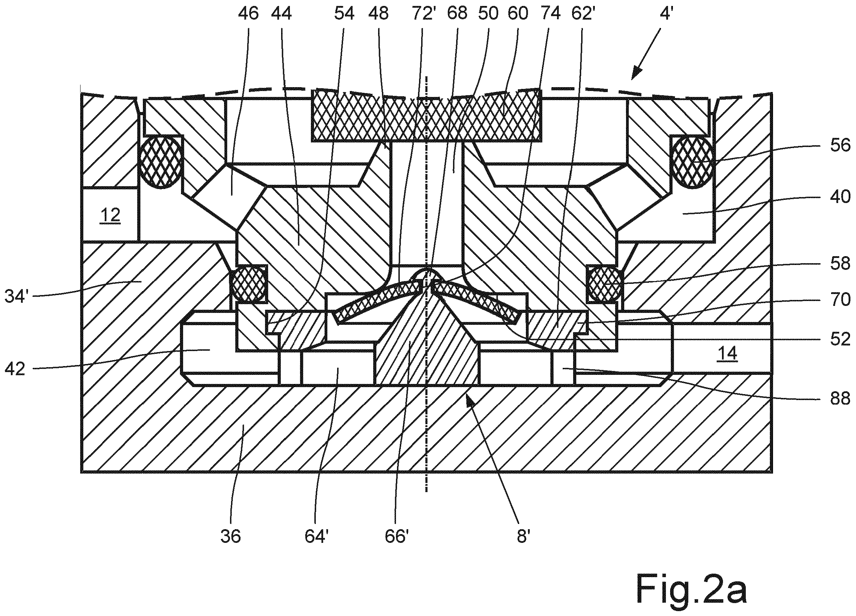

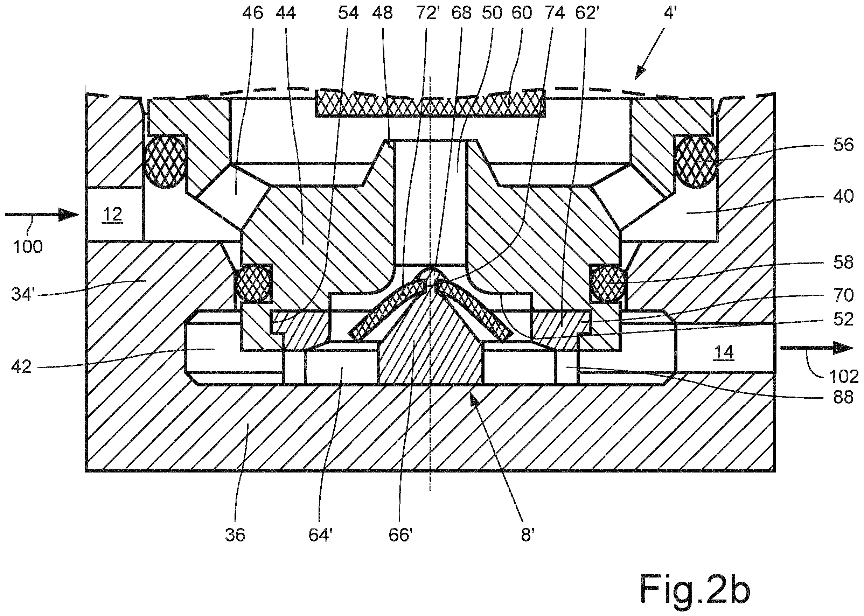

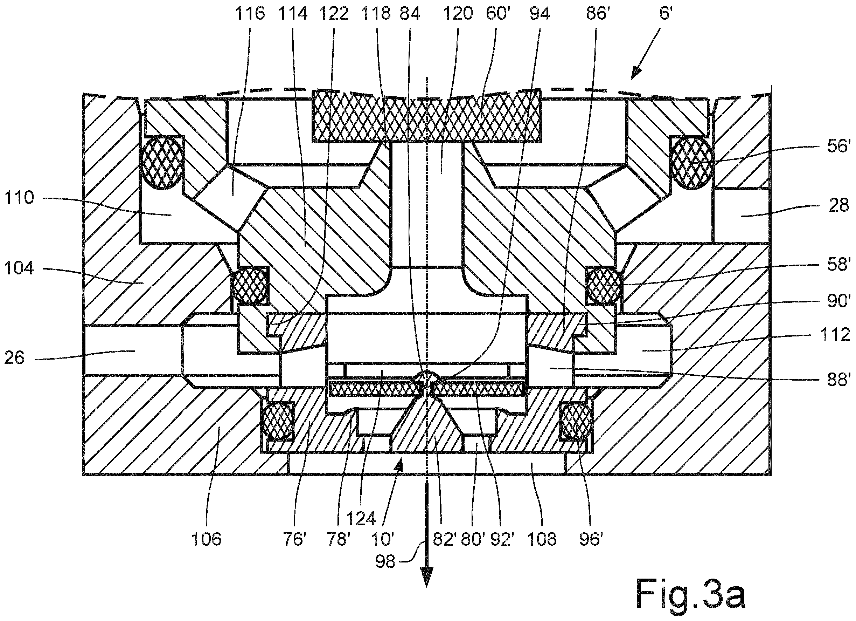

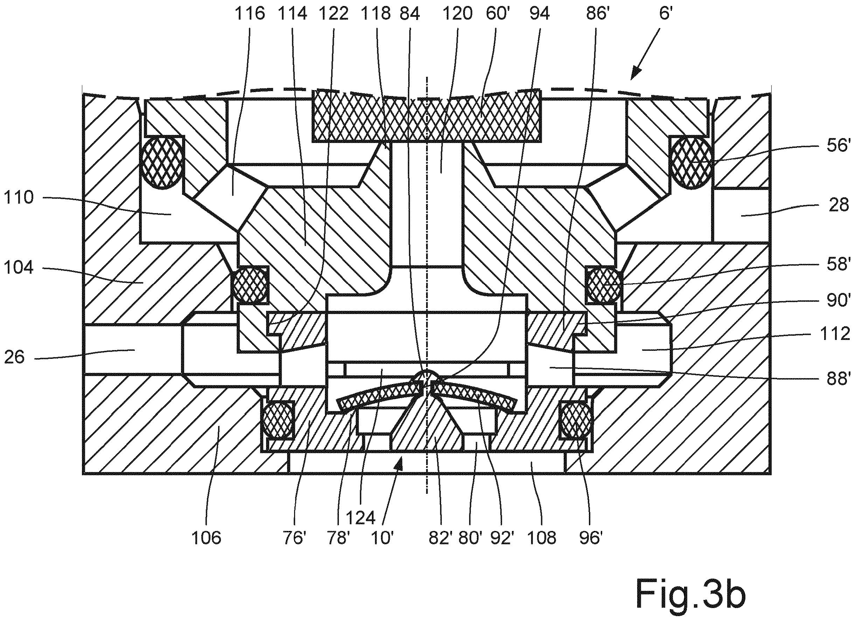

Nachfolgend sind anhand der Figuren 2a und 2b eine zweite Ausführungsform des Einlassventils 4' sowie anhand der Figuren 3a und 3b eine Ausführungsform des Auslassventils 6' einer zweiten Ausführungsvariante der erfindungsgemäßen Ventileinrichtung 2' beschrieben. Bei dieser zweiten Ausführungsvariante einer erfindungsgemäßen Ventileinrichtung 2' ist das Druckhalteventil 8' innerhalb des Gehäuses 34' des Einlassventils 4' angeordnet und somit in das Einlassventil 4' integriert (Fig. 2a, Fig. 2b) sowie das Ablassventil 10' innerhalb des Gehäuses 104 des Auslassventils 6' angeordnet und somit in das Auslassventil 6' integriert (Fig. 3a, Fig. 3b).

Das Einlassventil 4' gemäß den Figuren 2a und 2b ist weitgehend identisch zu dem Einlassventil 4 gemäß den Figuren 1a und 1b aufgebaut und unterscheidet sich von diesem nur dadurch, dass nun lediglich das Druckhalteventil 8' innerhalb des Ventilgehäuses 34' des Einlassventils 4' angeordnet ist, und dass die Membranscheibe 72' des Druckhalteventils 8' nun zusätzlich an dem Stützkörper 66' des Gehäuses 62' befestigt ist. Hierzu ist der Stützkörper 66' an seiner Spitze mit einem einstückig angeformten Pilzkopf 68 versehen, auf den die Membranscheibe 72' mittels deren Zentralbohrung 74 aufgestülpt ist. Somit ist die Membranscheibe 72' gegen eine Verlagerung aus der zentrierten Sollposition gesichert. Das vorzugsweise aus einem Kunststoff bestehende und als Spritzgussbauteil hergestellte Gehäuse 62' des Druckhalteventils 8' ist mittels an dem Gehäuse 62' angeordnete Rastnasen 70 durch einen Eingriff in die schon erwähnte Innennut 54 des Gehäuseeinsatzes 44 mit diesem verrastet.

In der Abbildung von Fig. 2a liegt das Dichtungselement 60 des Einlassventils 4' abdichtend an dem Ventilsitz 48 an, so dass das Einlassventil 4' geschlossen ist. Die Ausgangskammer 42 ist drucklos, so dass die Membranscheibe 72' des Druckhalteventils 8' aufgrund ihrer Eigenspannung an dem Ringbund 52 des Gehäuseeinsatzes 44 anliegt, weshalb das Druckhalteventil 8' geschlossen ist.

In der Fig. 2b ist das Dichtungselement 60 von dem Ventilsitz 48 des Einlassventils 4' abgehoben, so dass das Einlassventil 4' geöffnet ist. Durch die Beaufschlagung mit der über den Ventilsitz 48 in den Zentralkanal 50 einströmenden Druckluft ist die Membranscheibe 72' des Druckhalteventils 8' von dem Ringbund 52 des Gehäuseeinsatzes 44 abgehoben und bis zum Anliegen ihres radial äußeren Endes an die Diagonalstrebe 64' umgestülpt, so dass das Druckhalteventil 8' geöffnet ist. Somit strömt entsprechend den eingezeichneten Strömungspfeilen 100, 102 Druckluft aus der an den Eingang 12 des Einlassventils 4' angeschlossenen Vorratsleitung 18 über das geöffnete Einlassventil 4' und das geöffnete Druckhalteventil 8' in den an den Ausgang 14 des Einlassventils 4 angeschlossenen Druckraum 22 des Stellzylinders 20. Hierdurch wird die Reibungskupplung in vorgesehener Weise betätigt, also je nach Bauweise ausgerückt oder eingerückt wird. Kommt es nun in der an den Eingang 12 des Einlassventils 4 angeschlossenen Vorratsleitung 18 zu einem Druckabfall, so wird die Membranscheibe 72' des Druckhalteventils 8' aufgrund der wirksamen Druckdifferenz an den Ringbund 52 des Gehäuseeinsatzes 4 gedrückt, so dass das Druckhalteventil 8' dann geschlossen ist. Damit wird ein plötzlicher Druckverlust in dem an den Ausgang 14 des Einlassventils 4 angeschlossenen Stellzylinder 20 und eine dadurch bewirkte unbeabsichtigte Betätigung der betreffenden Reibungskupplung verhindert.

Das Auslassventil 6' ist als ein 2/2-Wege-Magnetsitzventil ausgebildet und ähnlich wie das Einlassventil 4' aufgebaut. Das Ventilgehäuse 104 des Auslassventils 6' weist einen zylindrischen Innenraum 110 auf, der mit dem Ausgang 28 und über eine ringzylindrische Eingangskammer 112 mit dem Eingang 26 verbunden ist. In den Innenraum 110 ist ein mit diagonalen Öffnungen 116 versehener, abgestuft zylindrischer Gehäuseeinsatz 114 eingesetzt, der einen Ventilsitz 118 und einen an diesen angrenzenden, in Richtung zu der Eingangskammer 112 führenden zylindrischen Zentralkanal 120 aufweist. Der Ausgang 28 und der Innenraum 110 des Ventilgehäuses 104 sind über zwei zwischen der Innenwand des Innenraums 110 und dem Gehäuseeinsatz 114 angeordnete Dichtringe 56', 58' abgedichtet. Der Ventilsitz 118 ist mittels eines zylinderscheibenförmigen Dichtungselements 60' verschließbar, welches in nicht dargestellter Weise von einer Ventilfeder auf dem Ventilsitz 118 gehalten wird und durch die Bestromung eines Elektromagneten von dem Ventilsitz 118 abhebbar ist.

Das Ablassventil 10' ist wie zuvor als ein Membranscheibenventil ausgebildet und koaxial zu dem Ventilsitz 118 in einer Öffnung 108 in einer an die Eingangskammer 112 angrenzenden Gehäusewand 106 des Ventilgehäuses 104 angeordnet. Das Ablassventil 10' weist eine biegeelastische Membranscheibe 92' auf, die innerhalb eines ringzylindrischen Gehäuses 76' axial zwischen einem ringförmigen Ventilsitz 78' und einem über mindestens eine Diagonalstrebe 80' mit dem Gehäuse 76' verbundenen kegelförmigen Stützkörper 82' sowie einem einstückig an das Gehäuse 76' angeformten Ringbund 124 geführt ist. Im Unterschied zu der ersten Ausführung des Ablassventils 10 gemäß den Figuren 1a und 1b ist die Membranscheibe 92' des Ablassventils 10' nun zusätzlich an dem Stützkörper 82' des Gehäuses 76' befestigt. Hierzu ist der Stützkörper 82' an seiner Spitze mit einem einstückig angeformten Pilzkopf 84 versehen, über den die Membranscheibe 92' mittels ihrer Zentralbohrung 94 übergestülpt ist. Somit ist die Membranscheibe 92' gegen eine Verlagerung aus der zentrierten Sollposition gesichert.

Die Eingangskammer 112 des Ventilgehäuses 104 ist über einen zwischen der Innenwand der Öffnung 108 in der Gehäusewand 106 und dem Gehäuse 76' des Ablassventils 10' angeordneten Dichtring 96' abgedichtet. Das vorzugsweise aus einem Kunststoff bestehende und als Spritzgussbauteil hergestellte Gehäuse 76' des Ablassventils 10' ist mittels Rastnasen 90', die an einer mit radialen Öffnungen 88' versehenen axialen Erweiterung 86' des Gehäuses 76' angeordnet sind, durch einen Eingriff in eine zugeordnete Innennut 122 des Gehäuseeinsatzes 114 mit diesem verrastet.

In der Fig. 3a liegt das Dichtungselement 60' abdichtend an dem Ventilsitz 118 an, so dass das Auslassventil 6' geschlossen ist. Die Eingangskammer 112 ist drucklos, sodass die Membranscheibe 92' des Ablassventils 10' aufgrund einer fehlenden Druckbelastung von dem Ventilsitz 78' abgehoben und eine ebene Gestalt angenommen hat. Somit ist das Ablassventil 10' geöffnet, wodurch leckagebedingt über das geschlossene Einlassventil 4' an den Arbeitseingang 24 des Stellzylinders 20 sowie in den die Eingangskammer 112 strömende Druckluft über das geöffnete Ablassventil 10' entsprechend dem eingezeichneten Strömungspfeil 98 unmittelbar in die Umgebung abströmt. Hierdurch wird eine ungesteuerte Belüftung des Stellzylinders 20 und eine dadurch bewirkte unbeabsichtigte Betätigung der betreffenden Reibungskupplung verhindert.

In Fig. 3b liegt das Dichtungselement 60' des Auslassventils 6'weiterhin an dem Ventilsitz 118 abdichtend an, sodass das Auslassventil 6' nun geschlossen ist. Die Eingangskammer 112 ist jedoch nun aufgrund eines geöffneten Einlassventils 4' druckführend, wodurch die Membranscheibe 92' des Ablassventils 10 auf dem Ventilsitz 78' abdichtend aufliegt, so dass das Ablassventil 10' geschlossen ist.

Durch die Integration des Druckhalteventils 8' in das Einlassventil 4' und des Ablassventils 10' in das Auslassventil 6' ist die Anzahl der zu montierenden Ventileinheiten der Ventileinrichtung 2 von zuvor vier auf zwei Ventileinheiten reduziert und damit der Montageaufwand entsprechend verringert sowie auch Bauraum eingespart.

### Bezugszeichenliste (Bestandteil der Beschreibung)

- 2: Ventileinrichtung (erste Ausführungsform)
- 2': Ventileinrichtung (zweite Ausführungsform)
- 4, 4': Einlassventil
- 6, 6': Auslassventil
- 8, 8': Druckhalteventil
- 10, 10': Ablassventil
- 12: Eingang des Einlassventils
- 14: Ausgang des Einlassventils
- 16: Druckluftquelle
- 18: Vorratsleitung
- 20: Stellzylinder
- 22: Druckraum des Stellzylinders
- 24: Arbeitseingang des Stellzylinders
- 26: Eingang des Auslassventils
- 28: Ausgang des Auslassventils
- 30: Entlüftungsausgang des Auslassventils
- 32: Entlüftungsausgang des Ablassventils
- 34, 34': Ventilgehäuse
- 36: Gehäusewand
- 38: Öffnung
- 40: Innenraum
- 42: Ausgangskammer
- 44: Gehäuseeinsatz
- 46: Öffnung
- 48: Ventilsitz
- 50: Zentralkanal
- 52: Ringbund
- 54: Innennut
- 56, 56': Dichtringe
- 58, 58': Dichtringe
- 60, 60': Dichtungselement
- 62, 62': Gehäuse
- 64, 64': Diagonalstrebe
- 66, 66': Stützkörper
- 68: Pilzkopf
- 70: Rastnase
- 72, 72': Membranscheibe
- 74: Zentralbohrung
- 76, 76': Gehäuse
- 78, 78': Ventilsitz
- 80, 80': Diagonalstrebe
- 82, 82': Stützkörper
- 84: Pilzkopf
- 86, 86': Erweiterung
- 88, 88': Öffnung
- 90, 90': Rastnase
- 92, 92': Membranscheibe
- 94: Zentralbohrung
- 96, 96': Dichtringe
- 98: Strömungspfeil
- 100: Strömungspfeil
- 102: Strömungspfeil
- 104: Ventilgehäuse
- 106: Gehäusewand
- 108: Öffnung
- 110: Innenraum
- 112: Eingangskammer
- 114: Gehäuseeinsatz
- 116: Öffnung
- 118: Ventilsitz
- 120: Zentralkanal
- 122: Innennut
- 124: Ringbund

## Patentansprüche

1. Ventileinrichtung (2, 2') für eine pneumatisch betätigbare Reibungskupplung, aufweisend ein eingangsseitig an eine druckführende Vorratsleitung (18) und ausgangsseitig an einen Arbeitseingang (24) eines Stellzylinders (20) der Reibungskupplung anschließbares, als 2/2-Wege-Magnetsitzventil ausgebildetes Einlassventil (4, 4'), ein eingangsseitig an den Arbeitseingang (24) des Stellzylinders (20) und ausgangsseitig an einen Entlüftungsausgang (30) anschließbares, als 2/2-Wege-Magnetsitzventil ausgebildetes Auslassventil (6, 6'), **gekennzeichnet durch** :
ein eingangsseitig an den Ausgang (14) des Einlassventils (4, 4') und ausgangsseitig an den Arbeitseingang (24) des Stellzylinders (20) anschließbares, als Rückschlagventil ausgebildetes Druckhalteventil (8, 8'), sowie ein eingangsseitig an den Arbeitseingang (24) des Stellzylinders (20) und ausgangsseitig an einen Entlüftungsausgang (32) anschließbares, als Rückschlagventil ausgebildetes Ablassventil (10, 10'),
und weiter **dadurch gekennzeichnet, dass** das Druckhalteventil (8, 8') innerhalb des Ventilgehäuses (34, 34') des Einlassventils (4, 4') koaxial zu dessen Ventilsitz (48) zwischen einem an den Ventilsitz (48) angrenzenden Zentralkanal (50) und einer mit dem Ausgang (14) des Einlassventils (4, 4') verbundenen Ausgangskammer (42) angeordnet ist, und dass das Ablassventil (10) innerhalb des Ventilgehäuses (34) des Einlassventils (4) angeordnet ist, oder dass das Ablassventil (10') innerhalb des Ventil gehäuses (104) des Auslassventils (6') angeordnet ist, und wobei das Druckhalteventil (8, 8') und das Ablassventil (10, 10') als Membranscheibenventile ausgebildet sind.

2. Ventileinrichtung nach Anspruch 1, **dadurch gekennzeichnet, dass** das Ablassventil (10) innerhalb des Ventilgehäuses (34) des Einlassventils (4) koaxial zu dessen Ventilsitz (48) axial benachbart zu dem Druckhalteventil (8) in einer Öffnung (38) in einer an die Ausgangskammer (42) angrenzenden Gehäusewand (36) des Ventilgehäuses (34) angeordnet ist.

3. Ventileinrichtung nach Anspruch 1, **dadurch gekennzeichnet, dass** das Ablassventil (10') innerhalb des Ventilgehäuses (104) des Auslassventils (6') koaxial zu dessen Ventilsitz (118) in einer Öffnung (108) in einer an eine mit dem Eingang (26) des Auslassventils (6') verbundenen Eingangskammer (112) angrenzenden Gehäusewand (106) des Ventilgehäuses (104) angeordnet ist.

4. Ventileinrichtung nach Anspruch 1, **dadurch gekennzeichnet, dass** in dem Druckhalteventil (8, 8') und/oder in dem Ablassventil (10, 10') jeweils eine biegeelastische Membranscheibe (72, 72'; 92, 92') zumindest teilweise innerhalb eines ringzylindrischen Gehäuses (62, 62'; 76, 76') axial zwischen einem über mindestens eine Diagonalstrebe (64, 64'; 80, 80') mit dem Gehäuse (62, 62'; 76, 76') verbundenen kegelförmigen Stützkörper (66, 66'; 82, 82') und einem Ringbund (124) des Gehäuses (76') oder einem axial benachbarten Bauteil (44, 52; 62, 64, 66) angeordnet ist.

5. Ventileinrichtung nach Anspruch 4, **dadurch gekennzeichnet, dass** die Membranscheibe (72, 92) des Druckhalteventils (8) und/oder des Ablassventils (10) jeweils fliegend gelagert innerhalb des betreffenden Gehäuses (62, 76) geführt ist.

6. Ventileinrichtung nach Anspruch 4, **dadurch gekennzeichnet, dass** die Membranscheibe (72', 92') des Druckhalteventils (8') und/oder des Ablassventils (10') eine durchgängige Zentralbohrung (74, 94) aufweist, mittels welcher die Membranscheibe (72', 92') an dem Stützkörper (66', 82') des betreffenden Gehäuses (62', 76') befestigt ist.

7. Ventileinrichtung nach Anspruch 6, **dadurch gekennzeichnet, dass** die jeweilige Membranscheibe (72', 92') des Druckhalteventils (8') und/oder des Ablassventils (10') jeweils durch ein Überstülpen der Zentralbohrung (74, 94) der Membranscheibe (72', 92') über einen an der Spitze des jeweiligen Stützkörpers (66', 82') befestigten oder einstückig angeformten Pilzkopf (68, 84) befestigt ist.

8. Ventileinrichtung nach einem der Ansprüche 1 bis 7, **dadurch gekennzeichnet, dass** das Gehäuse (62) des Druckhalteventils (8) passgenau in das Gehäuse (76) des Ablassventils (10) eingesetzt und über dieses an einem den Ventilsitz (48) aufweisenden Gehäuseeinsatz (44) des Einlassventils (4) befestigt ist.

9. Ventileinrichtung nach einem der Ansprüche 1 bis 7, **dadurch gekennzeichnet, dass** das Gehäuse (62') des Druckhalteventils (8') unmittelbar mit einem den Ventilsitz (48) aufweisenden Gehäuseeinsatz (44) des Einlassventils (8') verrastet ist.

10. Ventileinrichtung nach einem der Ansprüche 1 bis 9, **dadurch gekennzeichnet, dass** das Gehäuse (76, 76') des Ablassventils (10, 10') mit einem den Ventilsitz (48, 118) aufweisenden Gehäuseeinsatz (44, 114) des Einlassventils (8) oder des Auslassventils (10') verrastet ist.

## Claims

1. Valve device (2, 2') for a pneumatically actuated friction clutch, comprising an inlet valve (4, 4') designed as a 2/2-way solenoid seat valve, which can be connected on the input side to a pressure-carrying supply line (18) and on the output side to a working inlet (24) of an actuating cylinder (20) of the friction clutch, an outlet valve (6, 6') designed as a 2/2-way solenoid seat valve, which can be connected on the input side to the working inlet (24) of the actuating cylinder (20) and on the output side to a vent outlet (30),
**characterized by**:
a pressure-maintaining valve (8, 8') designed as a non-return valve, which can be connected on the input side to the outlet (14) of the inlet valve (4, 4') and on the output side to the working inlet (24) of the actuating cylinder (20), and a drain valve (10, 10') designed as a non-return valve, which can be connected on the input side to the working inlet (24) of the actuating cylinder (20) and on the output side to a vent outlet (32),
and further **characterized in that** the pressure-maintaining valve (8, 8') is arranged within the valve housing (34, 34') of the inlet valve (4, 4') coaxially to its valve seat (48) between a central channel (50) adjacent to the valve seat (48) and an outlet chamber (42) connected to the outlet (14) of the inlet valve (4, 4'), and **in that** the drain valve (10) is arranged within the valve housing (34) of the inlet valve (4), or **in that** the drain valve (10') is arranged within the valve housing (104) of the outlet valve (6'), and the pressure-maintaining valve (8, 8') and the drain valve (10, 10') being designed as diaphragm disk valves.

2. Valve device according to claim 1, **characterized in that** the drain valve (10) is arranged within the valve housing (34) of the inlet valve (4) coaxially to its valve seat (48) axially adjacent to the pressure-maintaining valve (8) in an opening (38) in a housing wall (36) of the valve housing (34) adjacent to the outlet chamber (42).

3. Valve device according to claim 1, **characterized in that** the drain valve (10') is arranged within the valve housing (104) of the outlet valve (6') coaxially to its valve seat (118) in an opening (108) in a housing wall (106) of the valve housing (104) adjacent to an inlet chamber (112) connected to the inlet (26) of the outlet valve (6').

4. Valve device according to claim 1, **characterized in that** in the pressure-maintaining valve (8, 8') and/or in the drain valve (10, 10') in each case a flexible diaphragm disk (72, 72'; 92, 92') is arranged at least partially within an annular-cylindrical housing (62, 62'; 76, 76') axially between a conical support body (66, 66'; 82, 82') connected to the housing (62, 62'; 76, 76') via at least one diagonal strut (64, 64'; 80, 80') and an annular collar (124) of the housing (76') or an axially adjacent component (44, 52; 62, 64, 66).

5. Valve device according to claim 4, **characterized in that** the diaphragm disk (72, 92) of the pressure-maintaining valve (8) and/or the drain valve (10) is in each case guided so as to be mounted in a floating manner within the relevant housing (62, 76).

6. Valve device according to claim 4, **characterized in that** the diaphragm disk (72', 92') of the pressure-maintaining valve (8') and/or the drain valve (10') has a continuous central bore (74, 94) by means of which the diaphragm disk (72', 92') is fastened to the support body (66', 82') of the relevant housing (62', 76').

7. Valve device according to claim 6, **characterized in that** the relevant diaphragm disk (72', 92') of the pressure-maintaining valve (8') and/or the drain valve (10') is fastened by slipping the central bore (74, 94) of the diaphragm disk (72', 92') over a mushroom head (68, 84) fastened to or formed integrally with the tip of the relevant support body (66', 82').

8. Valve device according to any of claims 1 to 7, **characterized in that** the housing (62) of the pressure-maintaining valve (8) is precisely inserted into the housing (76) of the drain valve (10) and is fastened via this to a housing insert (44) of the inlet valve (4) having the valve seat (48).

9. Valve device according to any of claims 1 to 7, **characterized in that** the housing (62') of the pressure-maintaining valve (8') is directly locked to a housing insert (44) of the inlet valve (8') having the valve seat (48).

10. Valve device according to any of claims 1 to 9, **characterized in that** the housing (76, 76') of the drain valve (10, 10') is locked to a housing insert (44, 114) of the inlet valve (8) or the outlet valve (10') having the valve seat (48, 118).

## Revendications

1. Dispositif à soupapes (2, 2') pour un embrayage à friction pouvant être actionné de manière pneumatique, présentant une soupape d'admission (4, 4') réalisée sous forme de soupape électromagnétique à siège à 2/2 voies pouvant être raccordée côté entrée à une conduite de réserve (18) conduisant la pression et pouvant être raccordée côté sortie à une entrée de travail (24) d'un cylindre positionneur (20) de l'embrayage à friction, une soupape d'échappement (6, 6') réalisée sous forme de soupape électromagnétique à siège à 2/2 voies pouvant être raccordée côté entrée à l'entrée de travail (24) du cylindre positionneur (20) et pouvant être raccordée côté sortie à une sortie d'évacuation d'air (30),
**caractérisé par** :
une soupape de maintien de pression (8, 8') réalisée sous forme de soupape antiretour pouvant être raccordée côté entrée à la sortie (14) de la soupape d'admission (4, 4') et pouvant être raccordée côté sortie à l'entrée de travail (24) du cylindre positionneur (20), ainsi que par une soupape de décharge (10, 10') réalisée sous forme de soupape antiretour pouvant être raccordée côté entrée à l'entrée de travail (24) du cylindre positionneur (20) et pouvant être raccordée côté sortie à une sortie d'évacuation d'air (32),
et en outre **caractérisé en ce que** la soupape de maintien de pression (8, 8') est disposée à l'intérieur du boîtier de soupape (34, 34') de la soupape d'admission (4, 4') de manière coaxiale à son siège de soupape (48) entre un canal central (50) adjacent au siège de soupape (48) et une chambre de sortie (42) reliée à la sortie (14) de la soupape d'admission (4, 4'), **et en ce que** la soupape de décharge (10) est disposée à l'intérieur du boîtier de soupape (34) de la soupape d'admission (4), **ou en ce que** la soupape de décharge (10') est disposée à l'intérieur du boîtier de soupape (104) de la soupape d'échappement (6'), et dans lequel la soupape de maintien de pression (8, 8') et la soupape de décharge (10, 10') sont réalisées sous forme de soupapes à disque à membrane.

2. Dispositif à soupapes selon la revendication 1, **caractérisé en ce que** la soupape de décharge (10) est disposée à l'intérieur du boîtier de soupape (34) de la soupape d'admission (4) de manière coaxiale à son siège de soupape (48) et de manière axialement adjacente à la soupape de maintien de pression (8), dans une ouverture (38) dans une paroi de boîtier (36) du boîtier de soupape (34) adjacente à la chambre de sortie (42).

3. Dispositif à soupapes selon la revendication 1, **caractérisé en ce que** la soupape de décharge (10') est disposée à l'intérieur du boîtier de soupape (104) de la soupape d'échappement (6') de manière coaxiale à son siège de soupape (118) dans une ouverture (108) dans une paroi de boîtier (106) du boîtier de soupape (104) adjacente à une chambre d'entrée (112) reliée à l'entrée (26) de la soupape d'échappement (6').

4. Dispositif à soupapes selon la revendication 1, **caractérisé en ce que** dans la soupape de maintien de pression (8, 8') et/ou dans la soupape de décharge (10, 10'), respectivement un disque à membrane (72, 72' ; 92, 92') élastique en flexion est disposé au moins partiellement à l'intérieur d'un boîtier (62, 62' ; 76, 76') cylindrique annulaire de manière axiale entre un corps de support (66, 66' ; 82, 82') conique relié au boîtier (62, 62' ; 76, 76') par l'intermédiaire d'au moins une entretoise diagonale (64, 64' ; 80, 80') et un collet annulaire (124) du boîtier (76') ou un composant (44, 52 ; 62, 64, 66) axialement adjacent.

5. Dispositif à soupapes selon la revendication 4, **caractérisé en ce que** le disque à membrane (72, 92) de la soupape de maintien de pression (8) et/ou de la soupape de décharge (10) est placé respectivement en porte-à-faux et est guidé à l'intérieur du boîtier (62, 76) concerné.

6. Dispositif à soupapes selon la revendication 4, **caractérisé en ce que** le disque à membrane (72', 92') de la soupape de maintien de pression (8') et/ou de la soupape de décharge (10') présente un alésage central (74, 94) traversant au moyen duquel le disque à membrane (72', 92') est fixé sur le corps de support (66', 82') du boîtier (62', 76') concerné.

7. Dispositif à soupapes selon la revendication 6, **caractérisé en ce que** le disque à membrane (72', 92') respectif de la soupape de maintien de pression (8') et/ou de la soupape de décharge (10') est fixé respectivement en enfilant l'alésage central (74, 94) du disque à membrane (72', 92') sur une tête en champignon (68, 84) fixée ou formée d'un seul tenant sur la pointe du corps de support (66', 82') respectif.

8. Dispositif à soupapes selon l'une des revendications 1 à 7,
**caractérisé en ce que** le boîtier (62) de la soupape de maintien de pression (8) est inséré de manière ajustée dans le boîtier (76) de la soupape de décharge (10) et est fixé par l'intermédiaire de celui-ci à un insert de boîtier (44), lequel présente le siège de soupape (48), de la soupape d'admission (4).

9. Dispositif à soupapes selon l'une des revendications 1 à 7,
**caractérisé en ce que** le boîtier (62') de la soupape de maintien de pression (8') est directement enclenché avec un insert de boîtier (44), lequel présente le siège de soupape (48), de la soupape d'admission (8').

10. Dispositif à soupapes selon l'une des revendications 1 à 9,
**caractérisé en ce que** le boîtier (76, 76') de la soupape de décharge (10, 10') est enclenché avec un insert de boîtier (44, 114), lequel présente le siège de soupape (48, 118), de la soupape d'admission (8) ou de la soupape de décharge (10').
